# EUROPEAN PATENT APPLICATION

(11) **EP 1 541 034 A1**
(43) Date of publication of application: **15.06.2005**
(21) Application number: 03257757.9
(22) Date of filing: 10.12.2003
(51) Int. Cl.: A23G 9/00, A23G 9/02

(54) **Frozen confectionery product**

(71) Applicant: UNILEVER PLC, London EC4P 4BQ (GB); UNILEVER N.V., 3013 AL Rotterdam (NL)
(72) Inventor: Lindner, Nigel Malcolm, Sharnbrook, Bedford, MK44 1LQ (GB); Sweeney, Sarah Good Humor-Breyers Ice Cream, Green Bay, Wisconsin 54303 (US); Sztehlo, Andrew Unilever Australasia, Epping, New South Wales 2121 (AU); Towell, Deborah Jane, Sharnbrook, Bedford, MK44 1LQ (GB); Winch, Paul Jonathan, Good Humor-Breyers Ice Cream, Green Bay, Wisconsin 54303 (US)
(74) Representative: Finnie, Nicholas James

(57) **Abstract**

A frozen confectionery product is provided comprising a plurality of discrete frozen confections, each discrete frozen confection being able to contact directly other discrete frozen confections in the product, which discrete frozen confections comprise an ice structuring protein (ISP) and have an average volume of at least 1 ml.

## Description

### Field of the invention

The present invention relates to frozen confectionery products which comprise a plurality of individual confections and which contain ice structuring proteins.

### Background to the invention

Stick frozen confectionery products such as ice lollies/popsicles are often sold to consumers as multipacks. However, the individual confections need to be wrapped to prevent them sticking together during storage. Wrapping the confections imposes additional manufacturing costs. Furthermore, consumers need to dispose of the wrappers, generating additional waste.

### Summary of the invention

We have now found that the addition of ice structuring proteins to frozen confectionery products reduces their tendency to stick and allows the products to be stored in contact with one another for extended periods of time without the need for wrappings. The appearance of such products is significantly improved compared to existing products even after storage at temperatures above about -20°C for several weeks.

This finding allows manufacturers to package together multiple frozen confectionery products without the need to individually wrap the products. In addition, this finding has enabled us to produce confectionery products in the form of, for example, bags of 'sweets/candies' where the frozen 'sweets/candies' are unwrapped but do not stick together or sinter following storage.

Accordingly, the present invention provides a frozen confectionery product comprising a plurality of discrete frozen confections, each discrete frozen confection being able to contact directly other discrete frozen confections in the product, which frozen confections comprise an ice structuring protein (ISP) and have an average volume of at least 1 ml.

Preferably the product comprises at least 10 discrete frozen confections, such as at least 20, 50 or 100 discrete frozen confections. In another embodiment, the product comprises less than 20 or 10 discrete frozen confections, for example from 2 to 20 or from 2 to 10.

In a preferred embodiment the discrete frozen confections have an average volume of from 5 ml to 100 ml. The frozen confections may, for example, be in the form of stick products, such as ice lollies or candy-sized pieces. In a highly preferred embodiment, the discrete frozen confections have a minimum thickness of at least 10 mm.

In one embodiment, the product is a water ice. Preferably the water ice comprises at least about 6 wt% solids, for example from 6 to 20wt% solids.

In another embodiment, the product comprises at least about 3 wt% of milk solids non-fat (MSNF). For example, the product can be selected from ice cream, frozen yoghurt or milk ice. Preferably the product comprises at least about 15 wt% solids. Typically, the product comprises from about 2 wt% to 15 wt% fat.

In a related aspect, the present invention provides a product comprising a container filled with a frozen confectionery product of the invention. The container can, for example, be a bag or a box which typically comprises sealing means.

The present invention also provides a retail unit comprising a plurality of containers, each container comprising a product of the invention wherein the product in each container is different.

### Detailed description of the invention

Unless defined otherwise, all technical and scientific terms used herein have the same meaning as commonly understood by one of ordinary skill in the art (e.g. in frozen confectionery manufacture, molecular biology and biochemistry). Definitions and descriptions of various terms and techniques used in frozen confectionery manufacture are found in Ice Cream, 4^{th} Edition, Arbuckle (1986), Van Nostrand Reinhold Company, New York, NY. Standard techniques are used for molecular and biochemical methods (see generally, Sambrook *et al.,* Molecular Cloning: A Laboratory Manual, 3^{rd} ed. (2001) Cold Spring Harbor Laboratory Press, Cold Spring Harbor, N.Y. and Ausubel *et al.,* Short Protocols in Molecular Biology (1999) 4^{th} Ed, John Wiley & Sons, Inc. - and the full version entitled Current Protocols in Molecular Biology).

### Ice structuring proteins

Ice structuring proteins (ISPs) are proteins that can influence the shape and size of the crystals of ice formed when freezing does occur, and inhibit recrystallisation of ice (Clarke et al., 2002, Cryoletters 23: 89-92). Many of these proteins were identified originally in organisms that live in sub-zero environments and are thought to protect the organism from the deleterious effects of the formation of ice crystals in the cells of the organism. For this reason many ice structuring proteins are also known as antifreeze proteins (AFPs). In the context of the present invention, an ISP is defined as a protein that has ice recrystallisation inhibitory (RI) activity.

Ice recrystallisation inhibitory activity properties can conveniently be measured by means of a modified splat assay as described in WO 00/53029.

2.5 µl of the solution under investigation in 30% (w/w) sucrose is transferred onto a clean, appropriately labelled, 16 mm circular coverslip. A second coverslip is placed on top of the drop of solution and the sandwich pressed together between finger and thumb. The sandwich is dropped into a bath of hexane held at -80°C in a box of dry ice. When all sandwiches have been prepared, sandwiches are transferred from the -80°C hexane bath to the viewing chamber containing hexane held at -6°C using forceps precooled in the dry ice. Upon transfer to -6°C, sandwiches can be seen to change from a transparent to an opaque appearance. Images are recorded by video camera and grabbed into an image analysis system (LUCIA, Nikon) using a 20x objective. Images of each splat are recorded at time = 0 and again after 60 minutes. The size of the ice-crystals in both assays is compared by placing the slides within a temperature controlled cryostat cabinet (Bright Instrument Co Ltd, Huntington, UK). Images of the samples are transfered to a Quantimet 520 MC image analysis system (Leica, Cambridge UK) by means of a Sony monochrome CCD videocamera.

Ice crystal sizing can be performed by hand-drawing around the ice-crystals. Typically, at least 100 to 400 crystals are sized for each sample. The ice crystal size is taken as being the longest dimension of the 2D projection of each crystal. The average crystal size is determined as the number average of the individual crystal sizes. The size of the ice-crystals in both assays is compared. If the size at 30-60 minutes is similar or only moderately (less than 10%) increased compared to the size at t=0, and/or the crystal size is less than 20 micrometer, preferably from 5 to 15 micrometer this is an indication of good ice-crystal recrystallisation properties.

Significant ice recrystallisation inhibitory activity can be defined as where a 0.01 wt% solution of the ISP in 30 wt% sucrose, cooled rapidly (at least Δ50°C per minute) to -40°C, heated rapidly (at least Δ50°C per minute) to -6°C and then held at this temperature results in an increase in average ice crystal size over one hour of less than 5 µm.

### Types of ISPs

ISPs for use according to the present invention can be derived from any source provided they are suitable for inclusion in food products. ISPs have been identified to date in fish, plants, lichen, fungi, micro-organisms and insects. In addition, a number of synthetic ISPs have been described.

Examples of fish ISP materials are AFGP (for example obtainable from Atlantic cod, Greenland cod and Tomcod), Type I ISP (for example obtainable from Winter flounder, Yellowtail flounder, Shorthorn sculpin and Grubby sculpin), Type II ISP (for example obtainable from Sea raven, Smelt and Atlantic herring) and Type III ISP (for example obtainable from Ocean pout, Atlantic wolffish, Radiated shanny, Rock gunnel and Laval's eelpout).

Type III ISPs are particularly preferred. Type III ISPs typically have a molecular weight of from about 6.5 to about 14 kDa, a beta sandwich secondary structure and a globular tertiary structure. A number of genes encoding type III ISPs have been cloned (Davies and Hew, 1990, FASEB J. 4: 2460-2468). A particularly preferred type III ISP is type III HPLC-12 (Accession No. P19614 in the Swiss-Prot protein database).

Lichen AFPs are described in WO99/37673 and WO01/83534.

Examples of plants in which ISPs have been obtained are described in WO 98/04699 and WO 98/4148 and include garlic-mustard, blue wood aster, spring oat, winter cress, winter canola, Brussels sprout, carrot (GenBank Accession No. CAB69453), Dutchman's breeches, spurge, daylily, winter barley, Virginia waterleaf, narrow-leaved plantain, plantain, speargrass, Kentucky bluegrass, Eastern cottonwood, white oak, winter rye (Sidebottom et al., 2000, Nature 406: 256), bittersweet nightshade, potato, chickweed, dandelion, spring and winter wheat, triticale, periwinkle, violet and grass.

The ISPs can be obtained by extraction from native sources by any suitable process, for example the isolation processes as described in WO 98/04699 and WO 98/4148.

Alternatively, ISPs can be obtained by the use of recombinant technology. For example host cells, typically micro-organisms or plant cells, may be modified to express ISPs and the ISPs may then be isolated and used in accordance with the present invention. Techniques for introducing nucleic acid constructs encoding ISPs into host cells are well known in the art.

Typically, an appropriate host cell or organism would be transformed by a nucleic acid construct that encodes the desired ISP. The nucleotide sequence coding for the polypeptide can be inserted into a suitable expression vector encoding the necessary elements for transcription and translation and in such a manner that they will be expressed under appropriate conditions (e.g. in proper orientation and correct reading frame and with appropriate targeting and expression sequences). The methods required to construct these expression vectors are well known to those skilled in the art.

A number of expression systems may be used to express the polypeptide coding sequence. These include, but are not limited to, bacteria, fungi (including yeast), insect cell systems, plant cell culture systems and plants all transformed with the appropriate expression vectors. Preferred hosts are those that are considered food grade - 'generally regarded as safe' (GRAS).

Suitable fungal species, include yeasts such as (but not limited to) those of the genera *Saccharomyces, Kluyveromyces, Pichia, Hansenula, Candida, Schizo saccharomyces* and the like, and filamentous species such as (but not limited to) those of the genera *Aspergillus, Trichoderma, Mucor, Neurospora, Fusarium* and the like. Preferably the species selected is a yeast, most preferably a species of *Saccharomyces* such as *S. cerevisiae.* Where glycosylation of the ISP leads to reduced activity then it is preferred that the host exhibits reduced glycosylation of heterologous proteins.

A wide variety of plants and plant cell systems can also be transformed with the nucleic acid constructs of the desired polypeptides. Suitable plant species include maize, tomato, tobacco, carrots, strawberries, rape seed and sugar beet.

The sequences encoding the ISPs are preferably at least 80% identical at the amino acid level to an ISP identified in nature, more preferably at least 95% or 100% identical. However, persons skilled in the art may make conservative substitutions or other amino acid changes that do not reduce the RI activity of the ISP. For the purpose of the invention these ISPs possessing this high level of identity to an ISP that naturally occurs are also embraced within the term "ISPs".

### Frozen confectionery products

Frozen confections include confections that typically include milk or milk solids, such as ice cream, milk ice, frozen yoghurt, sherbet and frozen custard, as well as frozen confections that do not contain milk or milk solids, such as water ice, sorbet, granitas and frozen purees.

Frozen confectionery products of the present invention comprise a plurality of discrete frozen confections. The frozen confections are not separated from one another by the use of wrappings or other non-edible packaging, or by compartmentalisation. Instead, the individual frozen confections are packaged such that they are able to contact directly other individual frozen confections. However, the individual water ices are able to move relative to each other, in other words they are not immobilised within, for example, a matrix such as a coating.

In a highly preferred embodiment, the frozen confectionery product of the invention is free-flowing, by which we mean that the individual confections do not stick to each other. Preferably, the frozen confectionery product of the invention remains free-flowing after storage at -10°C for at least 10 days, more preferably at least 15 or 20 days. In relation to larger products such as stick products, this can be measured by determining whether the products can be readily separated from one another with substantially no deformation of the product. The frozen confections have an average volume of at least 1 ml, preferably at least 2, 3 or 5 ml. Typically, the average maximum volume will be less than 100 ml. In the case of stick products, the volume will typically be from 20 to 100 ml. In another embodiment, the frozen confections may be shaped, flavoured and coloured to appear like candies. Consequently, the frozen confections of the invention may be analogous to ambient bags of unwrapped candies. A bag of such frozen 'candies' will typically comprise from 5 to 30 discrete pieces. An alternative retail format could use larger containers with a much greater number of pieces that could be scooped into a container, such as a bag, by the retailer or customer, for example as part of a 'pick and mix' retail format. The volume of such frozen confections will typically be from about 2 or 3 ml to about 20 ml.

The discrete frozen confections may be made to any shape, such as in the form of cubes, spheres or discs.

Preferably, the frozen confections have a minimum thickness, in all dimensions, of at least 10 mm, i.e. they are not thin. The frozen confections may be in the form of a composite product where at least one portion or region of the product, such as a core or layer, does not contain ISPs. An example of this would be a product containing a core of ice cream which lacks ISP, coated in a layer of ice cream, milk ice or water ice that does contain ISP. Preferably, substantially the outer layer of the composition confection comprises ISP, i.e. the region which will come into contact with other discrete frozen confections. It will be appreciated that in the case of a composite product, the wt% amount of ISP added is calculated solely in relation to those components of the confection that contain ISP and not in relation to the complete product. Frozen confections may be aerated or unaerated. By unaerated is meant a frozen confection having an overrun of less then 20%, preferably less than 10%. An unaerated frozen confection is not subjected to deliberate steps such as whipping to increase the gas content. Nonetheless, it will be appreciated that during the preparation of unaerated frozen confections, low levels of gas, such as air, may be incorporated in the product.

Aerated confections preferably have an overrun of from 25% to 100%.

Water ice confections typically contain sugar, water, colour, fruit acid or other acidifying agent, fruit or fruit flavouring and stabiliser. Preferably, the total solids content is at least 6 wt%, more preferably at least 8, 10, 15 or 20 wt% and may be as high as about 35 wt%. Preferably the total solids content is less than 35 wt%, more preferably less than 25 wt%. Water ices may be aerated or unaerated. If aerated, the overrun is typically less than about 50%, for example from about 25% to 30%. In one embodiment, the water ice confections of the invention are unaerated.

Frozen confections containing milk preferably contain at least about 3 wt% MSNF, more preferably from about 5 wt% to about 25 wt% MSNF. Milk ices will generally comprise at least about 10 or 11 wt% MSNF. Ice cream generally comprises at least 18 or 20 wt% MSNF. Milk-containing frozen confections will also typically comprise at least 2 wt% fat. Milk ices will generally comprise less than 7 wt% fat whereas ice cream generally comprises at least 8 or 10 wt% fat. In some embodiments, it is preferred that the total fat content is less than 8 wt%, more preferably less than 6 wt%.

Milk-containing frozen confections may be aerated or unaerated. If aerated, it is preferred that the overrun is from 50% to 100%.

Frozen confections of the invention typically comprise one or more stabiliser, such as one or more stabilisers selected from gums, agar, alginates and derivatives thereof, gelatin, pectin, lecithin, sodium carboxymethylcellulose, carrageenan and furcelleran. Preferably a blend of stabilisers is used, such as blend of a gum and carrageenan. In a preferred embodiment, the frozen confection comprises from 0.1 to 1 wt% stabiliser.

Frozen confections of the invention typically comprise at least about 0.0005 wt% ISP. ISPs can be used at very low concentrations and therefore preferably the confections comprise less than 0.05 wt% ISP. A preferred range is from about 0.001 to 0.01 wt%.

Frozen confections of the invention can be manufactured using a number of techniques known in the art. For example, free-flowing beads can be manufactured by dispensing drops of the liquid mix into a freezing chamber of liquid nitrogen (see WO96/29896). Other shapes can be manufactured by moulding techniques, for example by introducing a liquid premix into a cooled mould. Alternatively, ice cream and the like can be introduced into the mould after the initial freezing stages when the ice cream is still soft, and then hardened in the mould. Moulded products, in particular water ices, milk ice and the like, may contain complex shapes and have a high degree of surface definition. Frozen confections may optionally comprise sticks.

Frozen confection products of the invention, especially ice cream and the like can also be manufactured by standard extrusion techniques followed by cutting/shaping or by the use of special extrusion equipment. Coated products can, for example, be produced using dipping techniques. Further information on manufacturing techniques is given in Arbuckle, 1986.

Ice cream products and the like need not be subjected to a cold hardening step of below from -20°C to -25°C, although this may be used if desired, especially if the product is a composite product with a layer or core that does not contain ISP.

The frozen confectionery product of the invention may be packaging in containers for sale to consumers as an individual unit. The containers may, for example, be in the form of a box, carton or bag.

In the case of stick products, the container is typically in the form of a sealable box. The container typically contains from 4 to 20 pieces although it is possible to include more.

In the case of candies/sweets and the like, the frozen confections the volume of such containers is typically from 100 ml to 1000 ml, such as from 200 ml to 500 ml. However, the product can also be packaged in larger containers for retail purposes where the product is dispensed into smaller containers, such as bags, at the retail premises, e.g. in fast food outlets or as a pick 'n' mix format where consumers can choose from frozen confections of the invention having different shapes, flavours and/or colours. These larger containers may, for example, have a volume greater than about 1000 ml, for example at least 2000 ml or 5000 ml.

The present invention will now be further described with reference to the following examples, which are illustrative only and non-limiting.

### EXAMPLES

### Examples 1 to 6 and Comparative Examples 1 to 5

### - Ice cream/milk ice beads

### Materials and methods

Ice cream/milk ice premixes were produced according to the following recipes.

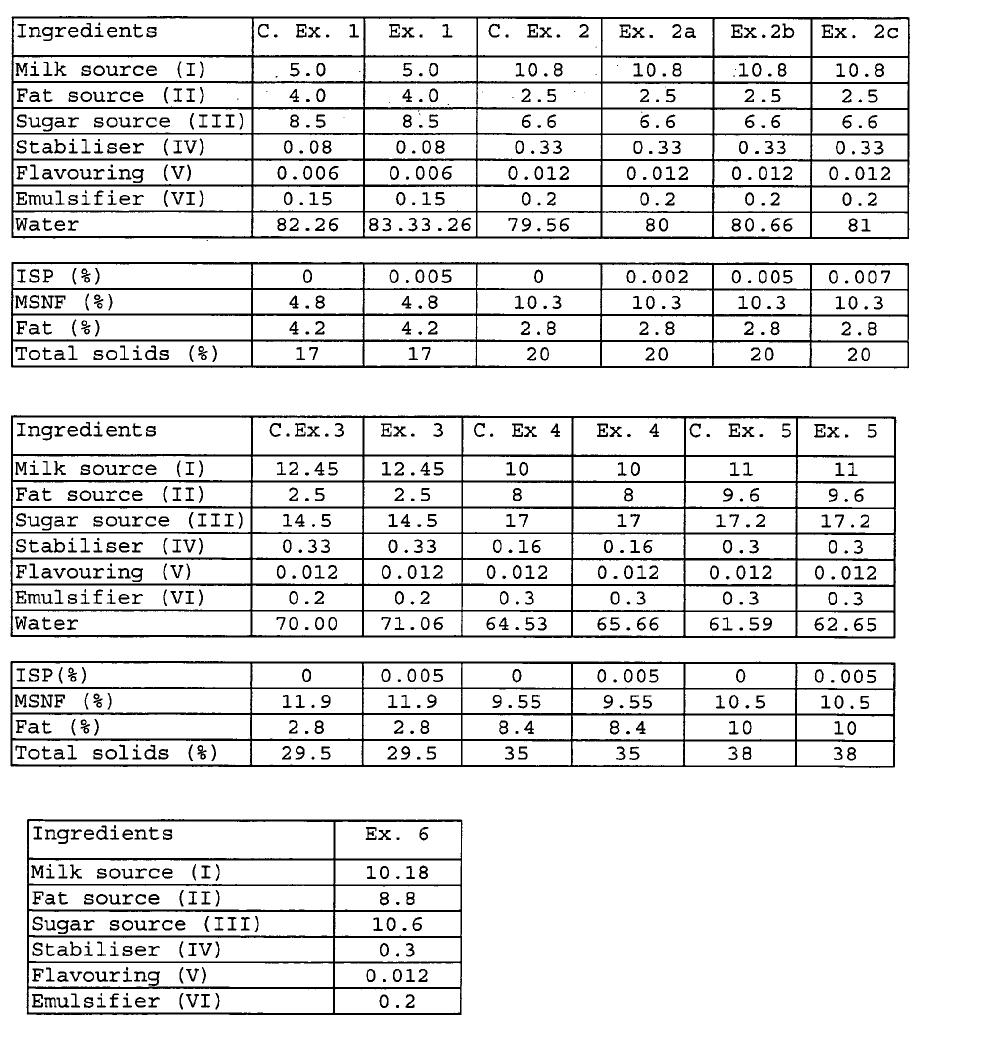

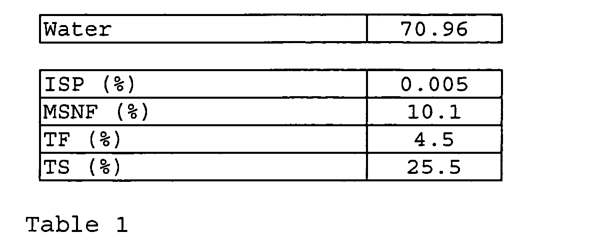

### Key

I Milk protein source can be any typically used ice cream or milk ice ingredient such as SMP.
II Any typically used ice cream or milk ice fat source such as coconut oil, butteroil or cream.
III Sugar source can be any typically used ice cream or milk ice ingredient such as either sucrose or a blend of sucrose/fructose in 60/40 ratio or sucrose/fructose in 98/2 ratio or 76/24 ratio of sucrose/MD40.
IV LBG or a blend of LBG/guar gum/carrageenan such as 90/0/10 or 61/30/9.
V Any typically used ice cream or milk ice flavourings.
VI Any typically used ice cream or milk ice emulsifier such as monoglycerolpalmitate (MGP) or glycerol monostearate (GMS.
TS indicates the total solids content as a percentage by weight.
TF indicates the total fat content (including emulsifier) as a percentage by weight.
MSNF indicates the milk solids non fat content as a percentage by weight

The determination of these values is conventional in the art.

### Mix process

All dry ingredients were added to water which was pre-heated to 80°C, followed by stirring for 5 minutes. Then all the liquid ingredients were added, stored for 1 minute, pasteurised at 82°C for 33 seconds, homogenised at 150-170bar pressure and cooled to 5°C until required. Glacein was added post pasteurisation for the purposes of this study, addition pre-pasteurisation would require removal of an equal weight of water from the formulation.

### Particle formation

The liquid mix at 5°C was loaded into a mix chamber of 5 litres capacity which fed directly into a dripping nozzle of 1 mm internal diameter. The liquid drops in turn fell into liquid nitrogen where they were rapidly frozen into approximately spherical balls. From here they were filled into a cylindrical type cup (height 95 cm, bottom outside diameter 63 cm, top outside diameter 46mm) to a fill weight of 85 g, from the base, the base being sealed on with an iron. The products were then placed at -25°C until required for measurement.

### Free flow test

Samples are held at a constant temperature of either -10°C or -25°C for 50 days. Samples in a pot (six replicates) were squeezed manually at -25°C, the pot was then opened and upturned and the flow properties of the contents assessed on a 5 point scale according to which:
1 = particles exit pot and are completely free flowing.
2 = if particles do not exit at 1, pot is re-closed and inverted 5 times to separate the particles, which exit when the lid is opened and upturned.
3 = as 2 but two gentle squeezes to the sides are additionally required before particles will exit. No residual deformation of the pack is seen.
4 = as 3 but two harder squeezes are required which will deform the pack, leaving it still deformed after the particles are removed.
5 = particles can not be made to exit.

A squeeze score of 3 is considered the maximum in terms of acceptable flowability. The scores quoted in Table 2 are mean values of the scores obtained for six replicate samples. The test was performed with respect to time, sampling every few days.

### Results

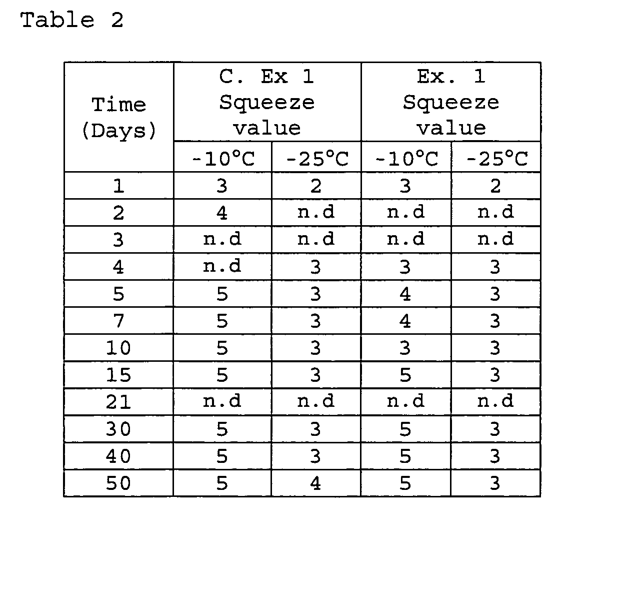

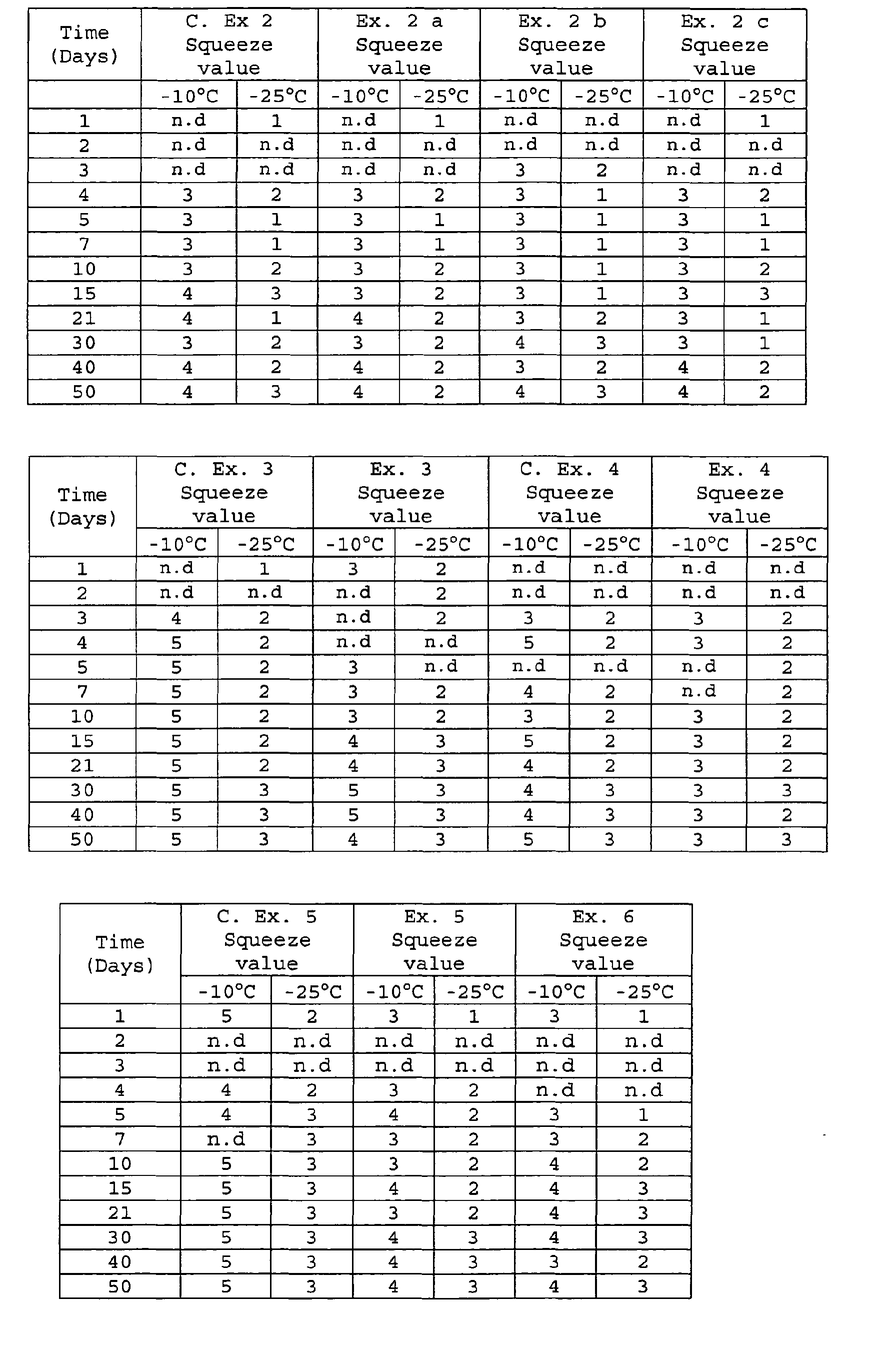

Comparative Example 1 is a control sample at 17% TS, which does not contain ISP. After 50 days at -25°C, the sample was unacceptable. After 2 days at -10°C, the sample became unacceptable.

Example 1 contains 0.005% ISP at 17% TS. Sample is free flowing throughout the test at -25°C. After 5 days at -10°C, the sample remains free flowing and did not reach the same level of unacceptability as example 1a until day 15.

Comparative Example 2 is a control sample at 20% TS, which does not contain ISP. After 50 days at -25°C, the sample remained free flowing. After 15 days at -10°C the sample became unacceptable.

Example 2a contains 0.002% ISP at 20% TS. After 50 days -25°C, the sample remained free flowing. After 40 days at -10°C, the sample became unacceptable.

Example 2b contains 0.005% ISP at 20% TS. After 50 days at -25°C, the sample remained free flowing. After 50 days at -10°C, the sample became unacceptable, showing marked improvement over comparative example 2 and example 2a.

Example 2c contains 0.007% ISP at 20% TS. After 50 days at -25°C, the sample remained free flowing. After 40 days at -10°C, the sample became unacceptable. This sample showed marked improvement over comparative example 2 and example 2a.

Comparative Example 3 is a control sample at 30% TS, which does not contain ISP. After 50 days at -25°C, the sample remained free flowing. After 3 days at -10°C, the sample became unacceptable.

Example 3 contains 0.005% ISP at 30% TS. After 50 days at -25°C, the sample remained free flowing. After 15 days at -10°C, the sample became unacceptable, showing marked improvement over the control.

Comparative Example 4 is a control sample at 35% TS, which does not contain ISP. After 50 days, the sample remained free flowing. After 15 days at -10°C, the sample became unacceptable.

Example 4 contains 0.005% ISP at 35% TS. After 50 days at -25°C, the sample remained free flowing. After 50 days at -10°C, the sample remained free flowing.

Comparative Example 5 is a control sample at 35% TS, which does not contain ISP. After 50 days at -25°C, the sample remained free flowing. After 1 day at -10°C, the sample became unacceptable.

Example 5 contains 0.005% ISP at 35% TS. After 50 days at -25°C, the sample remained free flowing. After 30 days at -10°C, the sample became unacceptable, showing marked improvement over the control.

Example 6 contains 0.005% ISP at 55% TS. After 50 days at -25°C, the sample remained free flowing. After 10 days at -10°C, the sample became unacceptable.

In summary, it is readily apparent that the addition of ISP leads to a product with improved characteristics and which has improved storage stability, as evidenced by better flowability after storage at -10°C than the corresponding product which lacks ISP.

### Examples 7 to 11 and Comparative Examples 7 to 10

### - water ice beads

### Materials and methods

Water ice premixes were produced according to the following recipes.

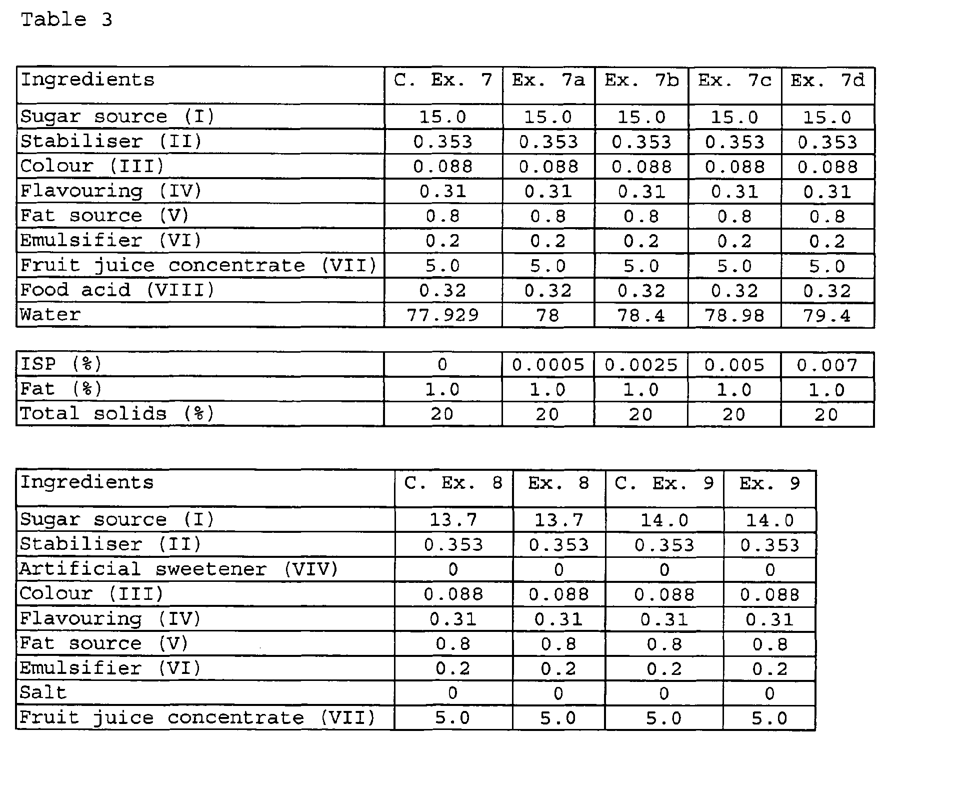

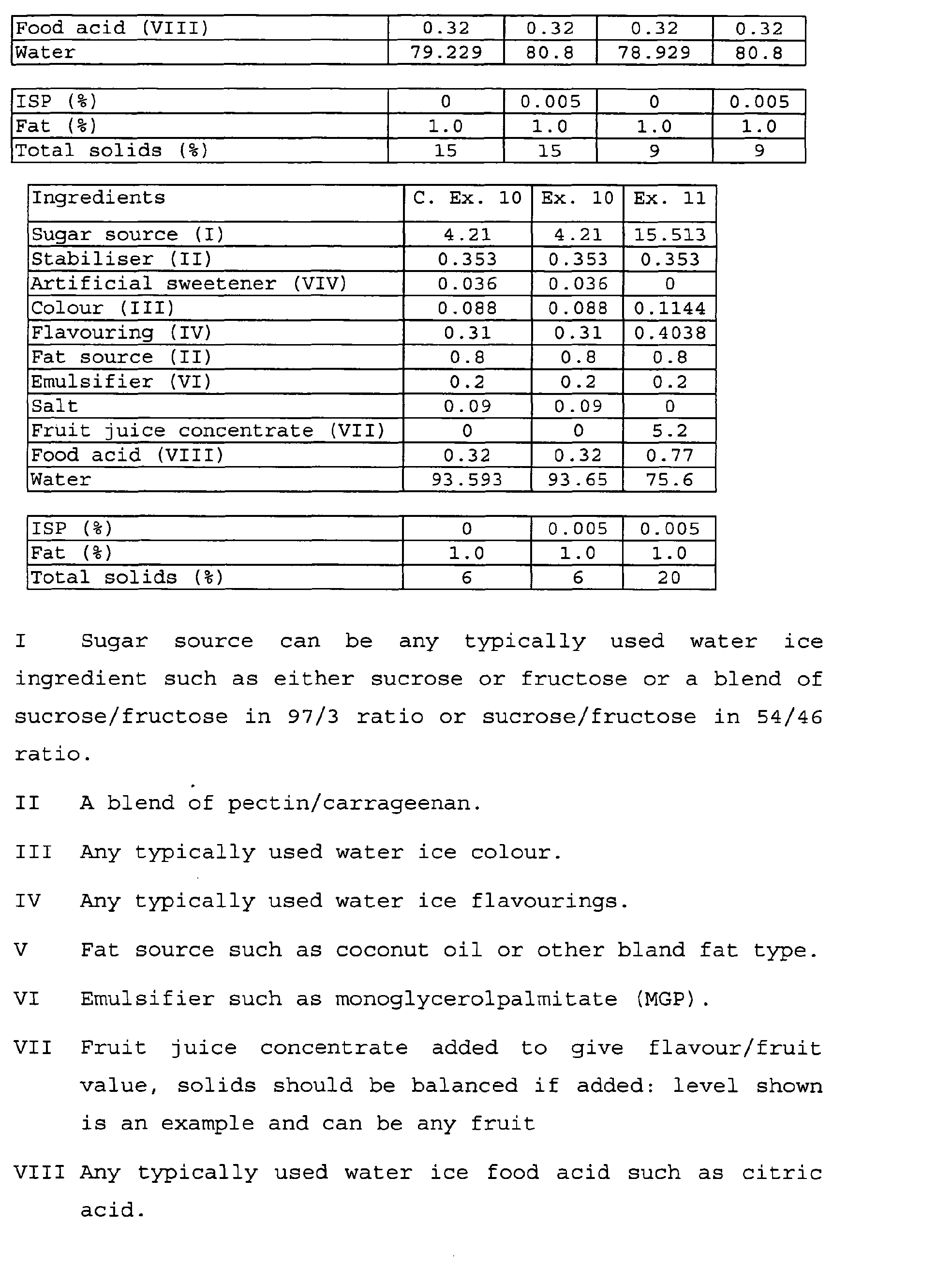

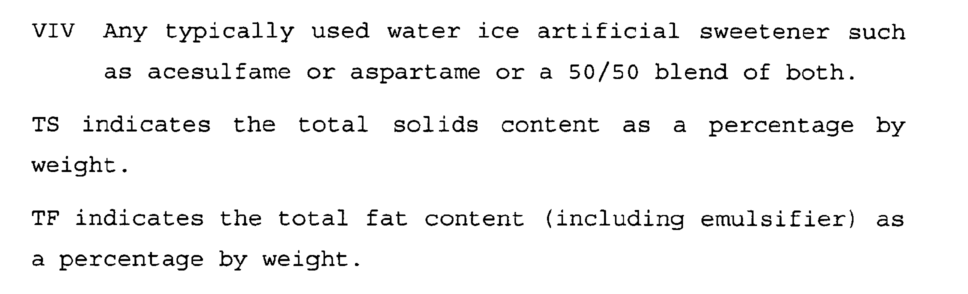

The determination of these values is conventional in the art

Mixing, particle formation and free-flow testing were performed as described above for ice cream/milk ice beads.

### Results

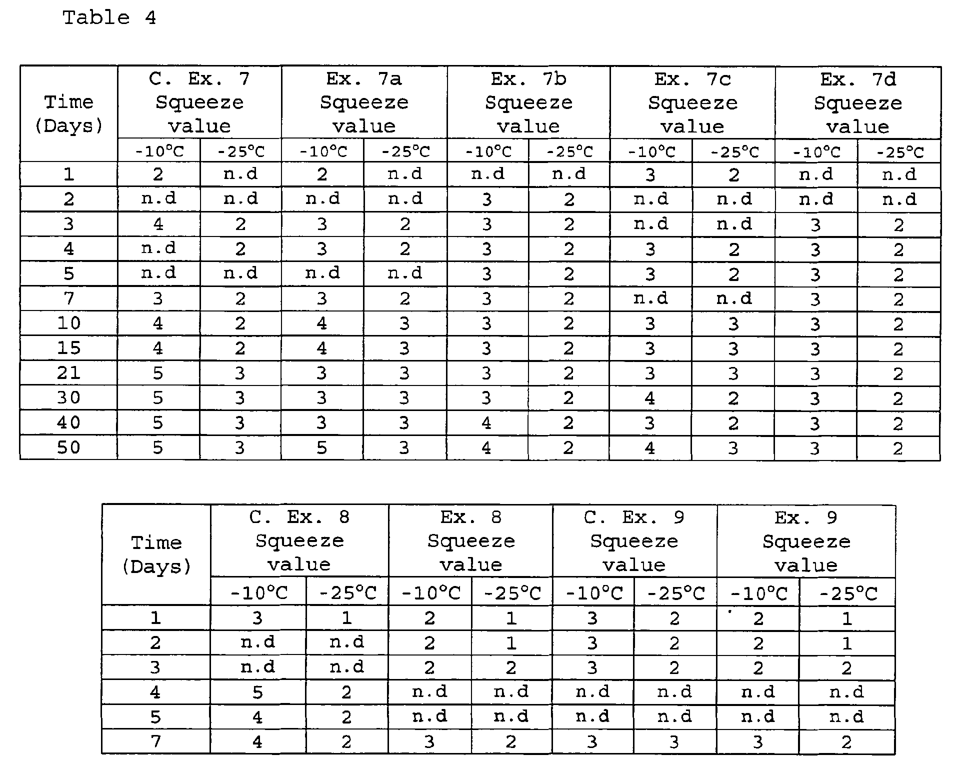

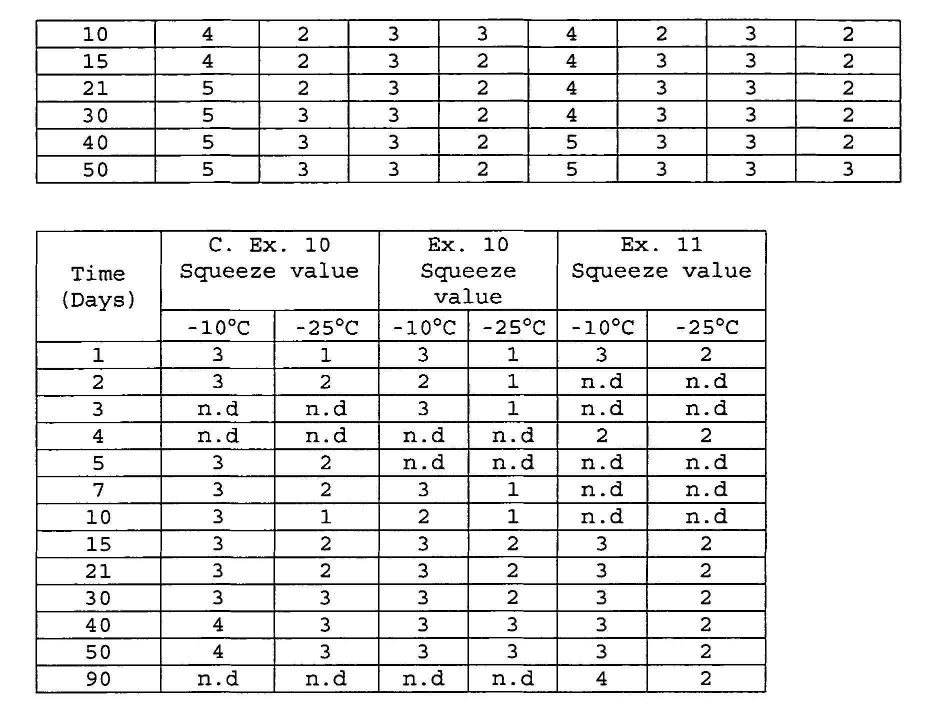

Comparative Example 7 is a control sample at 20% TS, which does not contain ISP. After 50 days at -25°C, the sample remained free flowing. After 10 days at -10°C the sample became unacceptable.

Example 7a contains 0.0005% ISP. After 50 days -25°C, the sample remained free flowing. After 50 days at -10°C, the sample became unacceptable.

Example 7b contains 0.0025% ISP. After 50 days at -25°C, the sample remained free flowing. After 40 days at -10°C, the sample became unacceptable.

Example 7c contains 0.005% ISP. After 50 days at -25°C, the sample remained free flowing. After 50 days at -10°C, the sample became unacceptable.

Example 7d contains 0.007% ISP. The sample remained free flowing throughout the test at both -25°C and -10°C. This sample showed marked improvement over comparative example 7 and examples 7a, 7b, and 7c.

Comparative Example 8 is a control sample at 15% TS, which does not contain ISP. The sample remained free flowing throughout the test at -25°C. After 4 days at -10°C, the sample became unacceptable.

Example 8 contains 0.005% ISP at 15% TS. The sample remained free flowing throughout the test at both -25°C and -10°C.

Comparative Example 9 is a control sample at 9% TS, which does not contain ISP. The sample remained free flowing throughout the test at -25°C. After 10 days at -10°C, the sample became unacceptable.

Example 9 contains 0.005% ISP at 9% TS. The sample remains free flowing throughout the test at both -25°C and -10°C.

Comparative Example 10 is a control sample at 6% TS, which does not contain ISP. The sample remained free flowing throughout the test at -25°C. After 40 days at -10°C, the sample became unacceptable.

Example 10 contains 0.005% ISP at 6% TS. The sample remained free flowing throughout the test at both -25°C and -10°C

Example 11 contains 0.005% ISP at 20% TS. After 90 days at -25°C, the sample remained free flowing. After 90 days at -10°C, the sample became unacceptable, showing marked improvement over comparative example 7.

The present invention has been exemplified using beads, which have volume of less than 1 ml. However, these results also demonstrate the applicability of the technology to larger ice confections, such as stick products.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

## Claims

1. A frozen confectionery product comprising a plurality of discrete frozen confections, each discrete frozen confection being able to contact directly other discrete frozen confections in the product, which discrete frozen confections comprise an ice structuring protein (ISP) and have an average volume of at least 1 ml.

2. A product according to claim 1 which comprises from 2 to 10 discrete frozen confections.

3. A product according to claim 1 which comprises at least 10 discrete frozen confections.

4. A product according to any one of the preceding claims wherein the discrete frozen confections have an average volume of from 5 to 100 ml.

5. A product according to any one of claims 1 to 4 which is an unaerated water ice.

6. A product according to claim 5 which comprises at least about 6 wt% solids.

7. A product according to any one of claims 1 to 4 which is an unaerated ice cream or milk ice.

8. A product according to claim 7 which comprises at least about 15 wt% solids.

9. A product according to claim 8 which comprises from about 2 wt% to 15 wt% fat.

10. A product according to any one of the preceding claims wherein the ISP is a fish type III ISP.

11. A product according to claim 10 wherein the ISP is type III AFP HPLC-12.

12. A product according to any one of the preceding claims wherein the frozen confections comprise at least 0.0005 wt% of the ISP.

13. A product according to any one of the preceding claims where the frozen confections have a minimum thickness of 10 mm.

14. A product according to any one of the preceding claims wherein the frozen confections comprise a stick.

15. A product comprising a container filled with a frozen confectionery product according to any one of claims 1 to 13.

16. A product according to claim 15 wherein the container has a volume of from 100 ml to 1000 ml.

17. A product according to claim 15 or claim 16 wherein the container is a bag.

18. A product according to claim 15 or claim 16 wherein the container is a box comprising sealing means.

19. A retail unit comprising a plurality of containers, each container comprising a product according to any one of claims 1 to 14 wherein the product in each container is different.
